# EUROPÄISCHE PATENTSCHRIFT

(11) **EP 0 693 594 B1**
(45) Veröffentlichungstag und Bekanntmachung des Hinweises auf die Patenterteilung: **11.04.2001**
(21) Anmeldenummer: 95100024.9
(22) Anmeldetag: 02.01.1995
(51) Int. Cl.: E03F 5/14, C02F 1/40, B01D 17/02

(54) **Fettabscheidevorrichtung**
Grease separator device
Dispositif de séparation de graisses

(30) Priorität: 22.06.1994 DE 9410097 U
(43) Veröffentlichungstag der Anmeldung: 24.01.1996
(73) Patentinhaber: BASIKA ENTWÄSSERUNGEN GMBH, D-42111 Wuppertal (DE)
(72) Erfinder: Drecker, Rolf, D-42111 Wuppertal (DE)
(74) Vertreter: Patentanwälte Dr. Solf & Zapf

(56) Entgegenhaltungen:
- EP-A- 0 564 870
- DE-A- 3 820 142
- DE-A- 4 407 380
- DE-C- 3 716 434
- DE-U- 9 312 708

## Beschreibung

Die Erfindung betrifft eine Fettabscheidevorrichtung nach dem Oberbegriff des Anspruchs 1.

Fettabscheider werden zum Klären von organisches Fett enthaltendem Abwasser verwendet, wie sie in Großküchen, Schlachthöfen, Molkereien usw. anfallen. Solche Abwasser enthalten meist auch Schlamm aus kleinen festen Teilchen, die eine größere Dichte als Wasser haben und sich in einem beruhigten Abwasser nach unten absetzen. Für derartige Abwasser wurde schon 1911 in der FR-A-431,552 vorgeschlagen, eine Fettabscheidevorrichtung aus einem zylinderförmigen Körper auszubilden, an dem sich nach oben und unten ein Kegel anschließt, wobei an den Kegelspitzen jeweils eine Öffnung vorgesehen ist. Das zu reinigende Abwasser wird tangential in das Innere des zylindrischen Teils eingeführt, so daß es in eine Rotationsbewegung versetzt wird und das leichte Fett in den oberen Kegel und der schwere Schlamm in den unteren Kegel gedrängt werden, wobei sowohl das Fett als auch der Schlamm an den Öffnungen der Kegelspitzen abgezogen werden.

Das auf diese Art und Weise gereinigte Wasser kann durch ein Rohr, das in den mittigen Bereich des zylindrischen Teils der Fettabscheidevorrichtung ragt, nach außen von der Fettabscheidevorrichtung abgeleitet werden.

Das Prinzip dieser Fettabscheidevorrichtung wurde gemäß DE 38 20 142 A1 im Jahre 1988 erneut aufgegriffen und zum schnellen Trennen von tierischen und pflanzlichen Fetten weiterentwickelt, um diese wiederverwenden zu können. Dabei sind in den zylinderförmigen Enden des Behälters der Fettabscheidevorrichtung diverse Elemente vorgesehen, um das Fett bzw. den Schlamm zu beruhigen und abzuleiten. Zum Abführen des Schlammes wird ebenfalls ein Krählwerk verwendet, das beim Abzug des Schlammes im Betrieb für einen vollständigen Austrag des Schlammes sorgt.

Diese Art der Fettabscheider mit einem zylindrischen Ober- und Unterteil setzt voraus, daß das Abwasser mit einer vorbestimmten Geschwindigkeit eingeführt wird, damit sich durch die Zentrifugalwirkung das Fett und der Schlamm vom Wasser nach oben bzw. nach unten absetzen. Deshalb sind diese Fettabscheidevorrichtungen besonders für die Anwendung bei einem gleichmäßigen Abwasseranfall, aber für wechselnde Abwassermengen nicht geeignet. Zudem erfordert der Betrieb dieser Fettabscheidevorrichtungen mit den drei Abläufen für Fett, gereinigtes Wasser und Schlamm eine aufwendige Steuerung, damit die Menge des zu klärenden Wassers einigermaßen konstant gehalten wird, um die Trennung aufgrund der Zentrifugalwirkung aufrechtzuerhalten.

Aufgrund des komplizierten Aufbaus und der schwierigen Handhabung dieser herkömmlichen Fettabscheider haben sich deshalb in der Praxis einfach aufgebaute Fettabscheider durchgesetzt, die nur nach dem Schwerkraftsprinzip arbeiten, indem in einem Behälter das Abwasser beruhigt wird, so daß das Fett an die Wasseroberfläche aufschwimmt. Soll jedoch ein solcher Abscheider mit einer Kammer, in der das Fett aufgrund seines geringeren Gewichts aufsteigt, auch für ein schlammhaltiges Abwasser verwendet werden, wird diese Art von Fettabscheider zweistufig ausgebildet mit einer ersten Stufe, dem Schlammfang, in dem sich der Schlamm nach unten absetzt und von dem das fetthaltige Abwasser in einem oberen Bereich des Schlammfangs in den eigentlichen Fettabscheider geleitet wird, wo das Abwasser wiederum beruhigt wird und das Fett sich nach oben absetzt. Eine solche Vorrichtung ist beispielsweise in der DE-A-20 03 565 beschrieben.

Eine Weiterentwicklung dieser Vorrichtung geht aus der DE 27 10 256 C2 hervor, die eine konstruktive und betriebliche Vereinfachung durch eine besondere Anordnung einer Pumpe zum Absaugen des gereinigten Abwassers bzw. des Schlammes beschreibt. Dabei ist der Schlammfang bzw. Sinkstoffabscheider unmittelbar angrenzend an den Fettabscheider bzw. Leichtstoffabscheider angeordnet, so daß diese beiden Abscheidebehälter eine Wand gemeinsam haben.

In DE 89 13 938 U1 wird ein weiterer zweistufiger Fettabscheider beschrieben mit einer Sinkstoffkammer zum Abtrennen des Schlammes und einer Schwimmstoffkammer zum Abtrennen des Fettes. Da diese Fettabscheider oft unter beengten Platzverhältnissen aufgestellt werden, wird das Becken, das die Sinkstoffkammer und die Schwimmstoffkammer umfaßt, mit mehreren Anschlußmöglichkeiten versehen, so daß es in unterschiedlichen Stellungen angeordnet werden kann, ohne daß das Becken selbst umgebaut werden muß.

Weitere Fettabscheider mit zwei Kammern für Sink- und Schwimmstoffe werden in DE 90 00 119 U1 und in der EP 529 464 A2 beschrieben. Der zweistufige Abscheider nach der EP 529 464 A2 ist kompakt ausgebildet und auch für einen mobilen Einsatz auf z.B. Volksfestplätzen oder dergl. geeignet. Er verfügt über das übliche Zweikammersystem mit einer ersten Kammer zum Trennen des Grobschmutzes und einer zweiten Kammer zum Trennen des Fettes. Das Zweikammersystem ist auch in mehreren Ausführungsformen in der DIN-Norm 4040 beschrieben, in der die Abmessungen dieser herkömmlichen Fettabscheider mit Bezug zur Nenngröße NG festgelegt sind, die wiederum vom Durchsatz und der Art des anfallenden Abwassers abhängt.

Ferner ist eine weitere Fettabscheidevorrichtung bekannt, die einen Schlammfang und einen Fettabscheider mit etwa gleichem Volumen aufweist. Der Schlammfang ist etwas höher als der Fettabscheider angeordnet, so daß der sich absetzende Schlamm durch einen am Boden des Schlammfangs vorgesehenen Schlammabzug direkt in einen Schlammsammelbehälter abgeleitet werden kann. Ferner ist diese Fettabscheidevorrichtung mit einem Kreislaufsystem versehen, das im Fettabscheider befindliche Sinkstoffe in den Schlammfang pumpen kann. Der Deckel des Fettabscheideelements weist eine beheizbare Haube auf, mit der das Fett in einen fließfähigen Zustand versetzt werden kann. Vorteilhaft an dieser Fettabscheidevorrichtung ist, daß der Schlamm mit nur geringem Wasseranteil vom Boden des Schlammfanges abgezogen werden kann, so daß zur Entsorgung des Schlammfanges keine speziellen Tankfahrzeuge verwendet zu werden brauchen, die den Schlamm mit dem im Schlammfang enthaltenen Wasser abpumpen. Der Schlamm wie auch das Fett können mit üblichen Sammelbehältern zum regional zuständigen Entsorgungsunternehmen oder Altfett-Recycling-Betrieb mit Kleintransportern oder dergleichen gebracht und leere Sammelbehälter z.B. im Austauschverfahren wieder mitgenommen werden. Mit einem solchen Verfahren verringern sich die Entsorgungskosten beträchtlich.

Nachteilig an dieser herkömmlichen Fettabscheidevorrichtung ist, daß die zwei Behälter für den Schlammfang und für den Fettabscheider, deren Größe sich nach DIN 4040 bestimmt, sehr viel Raum beanspruchen, insbesondere weil der Schlammfang bezüglich des Fettabscheiders etwas nach oben versetzt angeordnet ist, so daß vor allem bei einem unterirdischen Einbau eine relativ tiefe Grube benötigt wird. Der im Schlammfang abgesetzte Schlamm kann zwar ohne die gesamte Wasserladung abgezogen werden, jedoch ist der Wasseranteil im Schlamm nach wie vor beträchtlich, so daß bei einem Abwasser mit vielen den Schlamm bildenden Feststoffen die Schlammsammelbehälter häufig ausgetauscht werden müssen.

Diese herkömmlichen Fettabscheidevorrichtungen trennen zwar den Großteil des Fett- und Schlammgehalts im Abwasser, aber die Qualität des mit den herkömmlichen Vorrichtungen gereinigten Wassers war bisher in der Regel oft so schlecht, daß für die Abgabe des gereinigten Wassers in das Kanalisationssystem ein Schmutzwasserzuschlag entrichtet werden mußte. Dieser Schmutz wasserzuschlag richtet sich nach der abgegebenen Wassermenge und kann bei Großküchen und dergleichen beträchtliche Kosten verursachen.

Ferner ist eine Entwässerungspresse mit einer Schnecke für die Entwässerung von in seiner Struktur faserförmig oder großflächig zusammenhängendem Material bekannt, das Wasser unter geringem Druck freigibt. Diese Entwässerungspresse ist eine Kombination aus einer wellenlosen Schnecke, die in einem nach oben offenen Trog untergebracht ist, in dem das zu entwässernde Material hineingeschüttet wird, und einem an der Auswurfseite des Trogs angeordneten zylinderförmigen Spaltsieb, in das die Schnecke hineinragt. Die Schnecke ist nur teilweise in den Zylinder eingeführt, so daß sich im verbleibenden Zylinderhohlraum ein Pfropfen bildet. Ferner ist am freien Ende des Zylinders eine federbelastete Klappe angeordnet, um so dem Pfropfen einen Widerstand entgegenzusetzen, wodurch das Wasser aus dem Pfropfen durch das Spaltsieb hindurch ausgepreßt wird. Für die Entwässerung von Material, das größere Mengen von freiem Wasser mitführt, ist eine Vorentwässerung im Transportbereich der Presse notwendig. Hierfür wird eine Entwässerungspresse mit einem Fördertrog aus Spaltsiebmaterial und einer kunststoffbeschichteten Förderschnecke vorgesehen.

Aus der EP 0 564 870 A1 ist eine Abscheidevorrichung bekannt, welche eine zylindermantelförmige, flüssigkeitsdurchlässige Abscheidefläche aufweist, wobei die zylindermantelförmige, flüssigkeitsdurchlässige Abscheidefläche in einem Rohrkanal angeordnet ist, welcher mit Flüssigkeit gefüllt ist. Parallel zur Abscheidefläche ist eine Schneckenfördereinrichtung angeordnet, welche das Abscheidegut an der Abscheidefläche entlangstreichend abnimmt und nach oben fördert. Bei dieser Vorrichtung ist von Nachteil, daß die Abscheidefläche ständig beidseitig mit Flüssigkeit in Kontakt steht, so daß, um das Abscheidegut an der Abscheidefläche zwecks Abförderung zu halten, eine ständige Durchströmung der Abscheidefläche notwendig ist. Darüberhinaus hat die Vorrichtung einen hohen Platzbedarf.

Der Erfindung liegt die Aufgabe zugrunde, eine kompakte Fettabscheidevorrichtung zu schaffen, mit der bei besonders hoher Qualität des gereinigten Wassers sowohl Schlamm als auch Fett mit geringem Wassergehalt abgezogen werden können.

Die Aufgabe wird durch eine Fettabscheidevorrichtung mit den Merkmalen des Anspruchs 1 gelöst.

Vorteilhafte Ausgestaltungen der Erfindung sind in den Unteransprüchen gekennzeichnet.

Die erfindungsgemäße Fettabscheidevorrichtung ist zweistufig ausgebildet, wobei die erste Reinigungsstufe ein Schlammsieb mit einer automatischen Abzugseinrichtung aufweist, mit der vom Schlammsieb zurückgehaltene Feststoffe von diesem selbsttätig entfernt werden können. Das Schlammsieb ist in einem relativ kleinen Behälter oberhalb des eigentlichen Fettabscheiders untergebracht, womit sich der Platz- bzw. Raumbedarf der erfindungsgemäßen Fettabscheidevorrichtung im Vergleich zu dem beanspruchten Platz herkömmlicher Schlammfänger
- gleiche Leistung vorausgesetzt - beträchtlich reduziert. Da die erfindungsgemäße Fettabscheidevorrichtung durch das Aussieben der den Schlamm bildenden Feststoffteilchen diese fast vollständig vom Abwasser trennt, verringert sich das anfallende Schlammvolumen, so daß sich die Intervalle zum Austauschen der Sammelbehälter im Vergleich zu den Intervallen bei der herkömmlichen Fettabscheidevorrichtung deutlich vergrößern.

Durch die neue erfindungsgemäße Kombination aus einer ersten Stufe mit einem oberhalb des Fettabscheiders angeordneten Schlammsieb und einer zweiten Stufe mit einem Fettabscheider, der nach dem Schwerkraftsprinzip arbeitet, wird das Abwasser optimal sowohl von den den Schlamm bildenden Feststoffen als auch vom Fett getrennt. Überraschenderweise hat man festgestellt, daß das erfindungsgemäß gereinigte Wasser einen wesentlich geringeren Anteil an lipophilen Stoffen enthält als mit herkömmlichen Fettabscheidevorrichtungen gereinigtes Abwasser. Wahrscheinlich werden durch das Schlammsieb andere Filtermechanismen bewirkt und dadurch wesentlich mehr und auch andere Feststoffe mitausgefiltert als dies bei den herkömmlichen Schlammfallen der Fall ist.

Für das mit den herkömmlichen Vorrichtungen gereinigte Abwasser mußte in der Regel aufgrund des hohen Anteils an lipophilen Stoffen ein hoher Schmutzwasserzuschlag entrichtet werden, der sich bei einer Abwasserreinigung mit der erfindungsgemäßen Vorrichtung wesentlich verringert oder sogar vollständig entfallen kann. Durch den verbesserten Entzug der lipophilen Feststoffe vermindert sich die Löslichkeit der Fettstoffe im Abwasser, wodurch die Fettabtrennung im Fettabscheider schneller und mit höherer Reinheit erfolgt. Diesbezüglich wurde auch festgestellt, daß sich das mit der erfindungsgemäßen Vorrichtung gereinigte Wasser bei der biologischen Abwasserreinigung in Kläranlagen besser reinigen läßt, d.h., das Verhältnis des CSB-Wertes zum BSB 5-Wert stellt sich auf einen sehr günstigen Bereich ein. Auch dies führt zu erheblichen Kosteneinsparungen bei dem andernfalls fälligen Schmutzwasserzuschlag.

Durch die automatische Abzugseinrichtung wird ein Verstopfen des Schlammsiebes vermieden und ein kontinuierlicher Betrieb gewährleistet. Vorzugsweise ist die automatische Abzugseinrichtung eine Rechenvorrichtung, insbesondere eine Schnecken-Presse, die den abgezogenen Schlamm bzw. die abgezogenen Feststoffe komprimiert und weitestgehend, gegebenenfalls fast vollständig vom Abwasser trennt, wobei der anfallende Schlamm auf ein sehr geringes Volumen komprimiert wird.

Die Erfindung wird im folgenden beispielhaft anhand der Zeichnung näher erläutert. Es zeigen:
- Fig.1: eine erfindungsgemäße Fettabscheidevorrichtung in einer schematisch dargestellten Seitenansicht,
- Fig. 2: eine Draufsicht auf die Fettabscheidevorrichtung nach Fig. 1 in schematischer Darstellung,
- Fig. 3: eine Seitenansicht einer erfindungsgemäßen abscheidevorrichtung,
- Fig. 4: eine Rückansicht der Schlammabscheidevorrichtung nach Fig. 3,
- Fig. 5: eine Draufsicht auf die Schlammabscheidevorrichtung nach Fig. 3 ohne Deckel,
- Fig. 6: eine perspektivische Darstellung eines erfindungsgemäß verwendeten Spaltsiebes,
- Fig. 7: eine Seitenansicht des Spaltsiebes nach Fig. 6, und
- Fig. 8: schematisch eine weitere Ausführungsform einer Schlammabscheidevorrichtung in perspektivischer, teilweise freigeschnittener Darstellung.

Die erfindungsgemäße Fettabscheidevorrichtung ist zweistufig ausgebildet, wobei in der ersten Stufe das zu reinigende Abwasser mit einem Schlammsieb 15 von den im Abwasser enthaltenen Feststoffen getrennt wird. Die im Sieb zurückgehaltenen Feststoffe werden durch eine automatisch, vorzugsweise kontinuierlich arbeitende Abzugseinrichtung vom Sieb entfernt, so daß das Abwasser kontinuierlich durch das Sieb 15 geleitet werden kann.

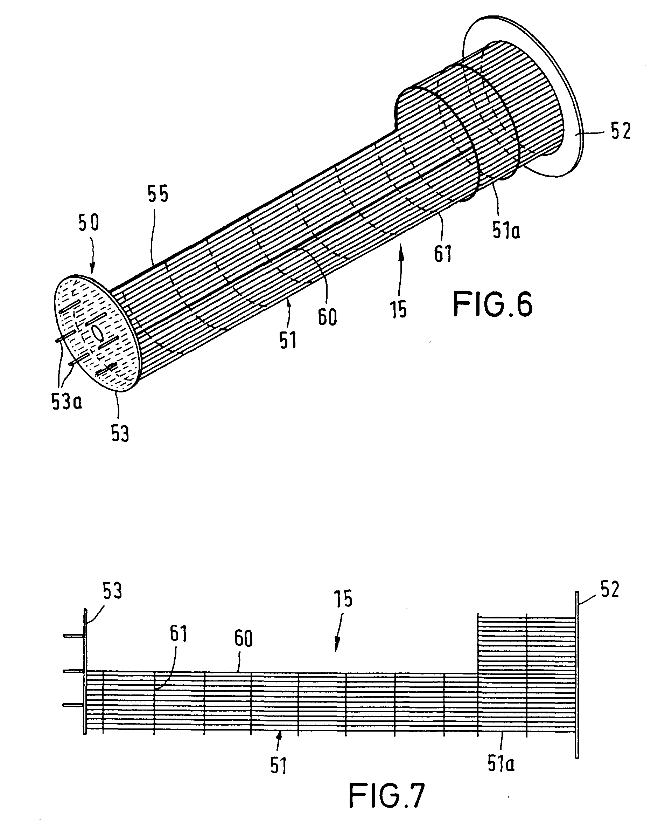

Das Schlammsieb 15 (Fig. 6, 7) ist in einem Einlaufbehälter 2 angeordnet, dessen Ablauföffnung für den Ablauf des mit dem Schlammsieb gefilterten Abwassers über eine Rohrverbindung 9 mit einem Fettabscheider 1 verbunden ist. Im Fettabscheider 1, der eine Kammer la begrenzt, wird das Fett auf herkömmliche Art und Weise nach dem Schwerkraftsprinzip getrennt, wobei das Fett im beruhigten Wasser oben aufschwimmt.

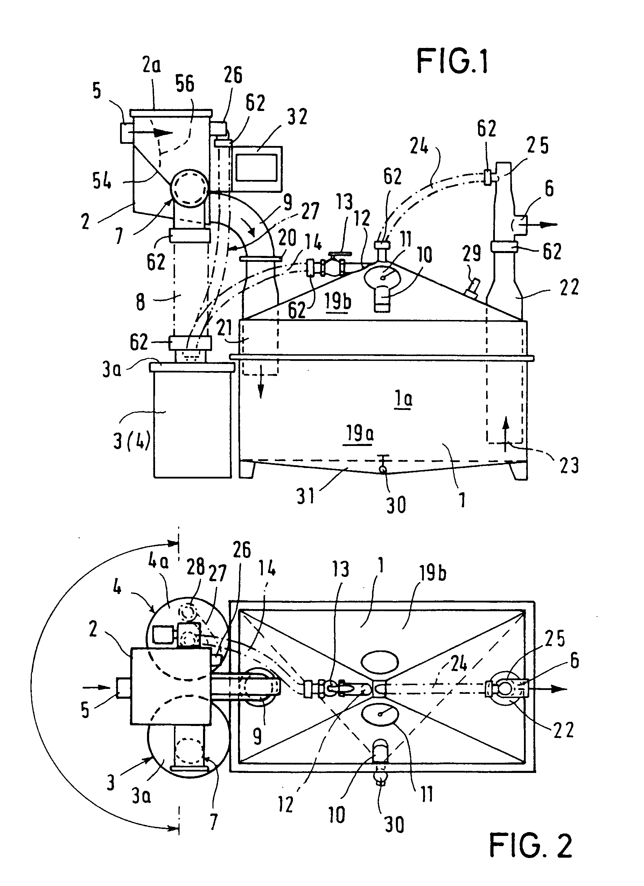

Die Rohrverbindung 9 zwischen Einlaufbehälter 2 und Fettabscheider 1 ist an ein Zulaufrohr 21 des Fettabscheiders 1 über eine Flanschverbindung 20 angeschlossen. Der Fettabscheider 1 kann als Druckbehälter mit einer nach oben offenen Fettabscheiderwanne 19a und einem entsprechend auf die Fettabscheiderwanne 19a passenden Fettabscheiderdeckel 19b ausgebildet sein (Fig. 1). Das Zulaufrohr 21 ist z.B. einteilig mit dem Fettabscheiderdekkel 19b ausgebildet, so daß es im geschlossenen Zustand des Deckels in die durch den Fettabscheider 1 begrenzte Kammer la mündet. Das gereinigte Abwasser wird durch ein Ablaufrohr 22 aus dem Fettabscheider 1 geführt, wobei das Ablaufrohr 22 z.B. einteilig mit dem Fettabscheiderdeckel 19b verbunden ist und mit seiner offenen Mündung 23 in den unteren Bereich des Fettabscheiders 1 ragt. Im Fettabscheidedeckel 19b ist vorzugsweise ein Sensor 29 vorgesehen, der die Fettdicke und/oder die Höhenstände des Fetts und des gereinigten Abwassers ermitteln kann.

Zum Abführen des Fettes ist im Fettabscheiderdeckel 19b, der vorzugsweise kegel- oder domförmig ausgebildet ist, an seinem oberen Bereich eine Fettablaßmündung 12 vorgesehen, an die über ein Ansatzstück ein Fettablaßhahn 13 angeschlossen ist. Vom Fettablaßhahn wird das Fett über eine Fettablaßschlauchverbindung 14 in einen Fettsammelbehälter 4 geleitet. Der Fettsammelbehälter 4 wie auch ein Schlammbehälter 3 sind z.B. freistehende, austauschbare Sammelbehälter, die mit einem Deckel 3a bzw. 4a an die entsprechenden Leitungen 8, 14 zum Zuführen des Schlammes bzw. des Fettes angeschlossen sind. Die Deckel 3a, 4a sind vorzugsweise mit Schnellspannverschlüssen an den Behältern 3, 4 befestigt. Der Inhalt der Behälter 3, 4 für die Feststoffe bzw. das Fett wird vorzugsweise durch eine Füllstandsmeßeinrichtung (nicht dargestellt), die mit dem Sensor 29 zusammenwirkt, überwacht, die selbsttätig den Betrieb der Fettabscheidevorrichtung bei einem voll gefüllten Behälter unterbricht und ein Signal zum Wechseln des Behälters 3, 4 abgibt.

Der Fettabscheider 1 hat vorzugsweise einen rechteckigen Querschnitt, wodurch er im Vergleich zu einem Behälter mit kreisrundem Querschnitt platzsparend aufgestellt werden kann.

Vorteilhaft an der erfindungsgemäßen Abscheidevorrichtung ist, daß nur der Fettabscheider 1 ein großvolumiger Behälter ist, dessen Abmessungen von der Nenngröße NG abhängen und nach DIN 4040 vorgeschrieben sind. Die übrigen Behälter, wie der Einlaufbehälter 2, der Schlammbehälter 3 und Fettsammelbehälter 4, haben wesentlich geringere Ausmaße als der Fettabscheider 1, wobei der Schlammbehälter 3 und der Fettsammelbehälter 4 vorzugsweise unmittelbar neben dem Fettabscheider 1 jedoch an einer beliebigen Stelle aufstellbar sind. Der Einlaufbehälter 2 wird zweckmäßigerweise über den Behältern 3, 4 und vorzugsweise auch über der Fettabscheiderwanne 19a des Fettabscheiders 1 so angeordnet, daß er keine weitere Grundfläche eines Aufstellraumes beansprucht, und eine sich aus dem Einlaufbehälter 2 erstreckende Schlammabzugseinrichtung über dem Schlammbehälter 3 angeordnet ist, so daß der Schlamm durch eine z.B. als Fallrohr ausgebildete Leitung 8 nach unten in den Schlammbehälter 3 fallen kann.

Der Einlaufbehälter 2, der vorzugsweise einen rechteckigen Querschnitt hat, ist um eine vertikale Achse drehbar, vorzugsweise um 180° schwenkbar, neben und über dem Fettabscheider 1 angeordnet (Fig. 1, 2).

Das Schlammsieb 15 ist vorzugsweise als sogenanntes an sich bekanntes Spaltsieb ausgebildet mit einem Siebkörper, der im wesentlichen aus parallel auf Abstand verlaufenden Profildrähten oder -stäben 60 besteht, die in bestimmten, relativ großen Abständen durch quer verlaufende Profildrähte oder -stäbe 61 verbunden sind. Die einlaufseitige Spaltbreite kann sehr klein sein (z.B. 0,5 bis 5,0 insbesondere 0,5 bis 1,5 mm) und ist so bemessen, daß die Feststoffe wie erwünscht zurückgehalten werden, wobei das im Abwasser befindliche Fett durch das Sieb hindurchgeht. Bei dem Spaltsieb ist die auslaufseitige Spaltbreite zwischen benachbarten Profilstäben 60 bzw. Dreikantstäben weiter als die einlaufseitige Spaltbreite, so daß ein Siebspalt sich von der Einlaufseite zur Auslaufseite hin keilförmig erweitert. Das Spaltsieb ist zweckmäßigerweise aus einem rinnenförmigen Bereich 51 ausgebildet, an dem sich ein zylinderförmiger Bereich 51a anschließt, und hat bei großer, offener Siebfläche eine hohe Siebleistung bei langer Lebensdauer, weshalb es für den Einsatz bei Fettabscheidevorrichtungen besonders geeignet ist.

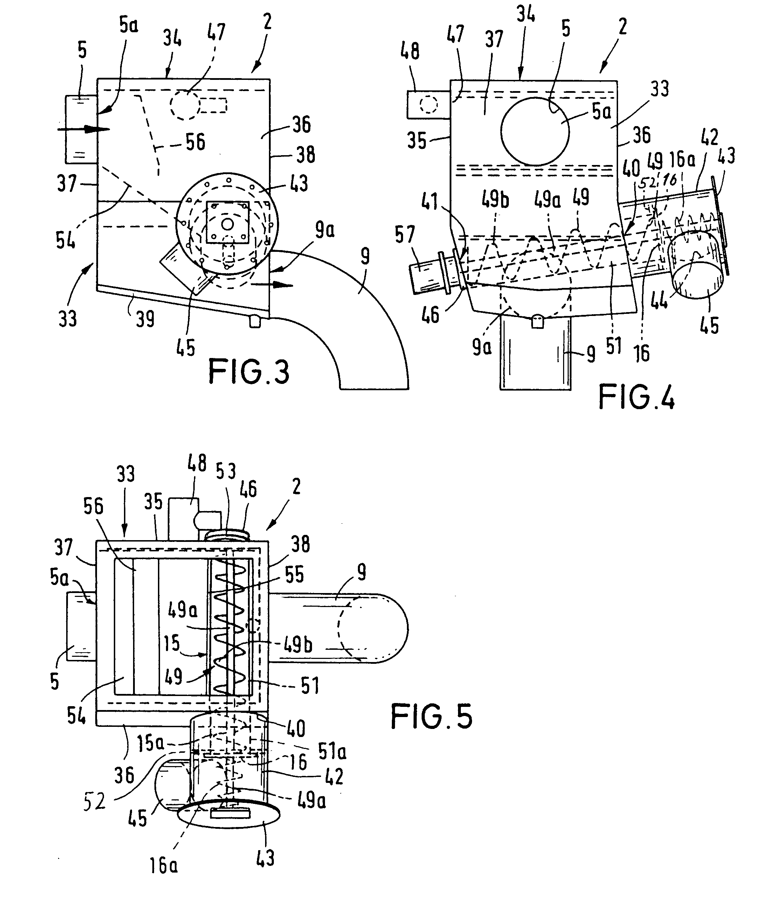

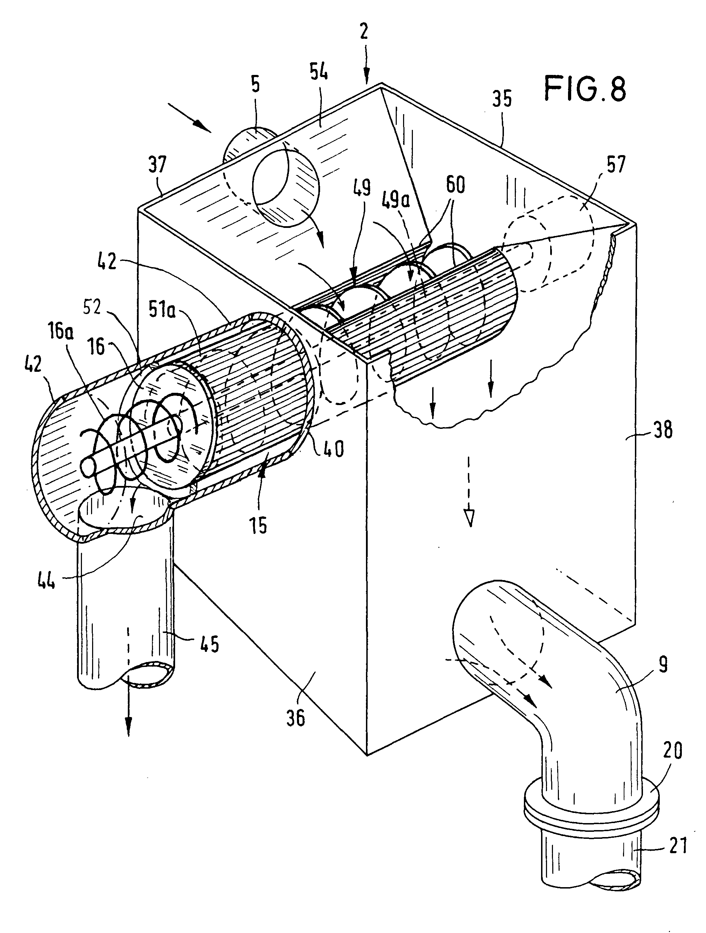

Das Schlammsieb 15 ist mit einer automatisch arbeitenden Abzugseinrichtung zum Entfernen der auf dem Schlammsieb 15 zurückgehaltenen Feststoffe kombiniert. Eine solche Abzugseinrichtung ist vorzugsweise eine in die Rinne 51 bzw. in den zylinderförmigen Bereich 51a des Siebes 15 formschlüssig passende Schnecke 49, die außerhalb des Einlaufbehälters in einem Zylinderabschnitt 42 gelagert und von ihm umgeben ist und mit der der Schlamm vom Sieb 15 in axialer Richtung abgeschoben wird. Diese Anordnung aus Schlammsieb 15 und Schnecke 49 erstreckt sich durch den Behälter 2 bis an den Rand des Fallrohres 8 und ist vorzugsweise mit einer leichten Steigung zum Fallrohr 8 hin angeordnet, woraus eine Presswirkung durch die Transportschnecke auf den Schlamm insbesondere im zylinderförmigen Bereich 51a des Siebes 15 resultiert und weiteres Wasser, das aus dem Schlamm gepreßt wird, zurück in den Behälter 2 fließen kann. Die Schnecke 49 besteht aus einer Schneckenwelle 49a und daran umlaufend angeordnete Schneckenwindungen 49b. Die Schneckenwindungen 49b erstrecken sich bis in den zylinderförmigen Bereich 51a des Siebs 15, vorzugsweise bis an dessen im Zylinderabschnitt 42 lagerndes freie Ende 15a. An dem freien Ende 15a des zylinderförmigen Bereichs 51a des Siebes 15 ist ein Deckel 16 vorgesehen, der auf der Schneckenwelle 49a axialverschiebbar sitzt und durch eine Feder 16a vorgespannt ist (Fig. 4, 8). Der Deckel 16 hält den Schlamm im Sieb 15 zurück, so daß sich im zylinderförmigen Bereich ein Schlammpfropfen bildet. Die Stärke der Federkraft beeinflußt den Grad der Entwässerung, wobei durch das Auspressen von Wasser der Wassergehalt der abgeführten Feststoffe bzw. des abgeführten Schlammes weitestgehend beispielsweise auf einen Anteil von 20% - handtrocken - vermindert wird, wodurch sich das Abfallvolumen weiter verringert.

Die Schnecke 49 wird von einem Motor 57 angetrieben, der über einen Wechselschalter so steuerbar ist, daß bei einer möglichen Störung durch eingeklemmte gröbere Teile der Antrieb angehalten und auch gegebenenfalls zurückgefahren werden kann, so daß das störende Teil entnommen werden kann. Eine lösbare Abdeckung 2a des Einlaufbehälters 2 ist vorzugsweise mit einem Endlagenschalter ausgestattet, der beim Öffnen des Einlaufbehälters 2 den Schneckenantrieb unterbricht, um beim Hantieren am Schneckenantrieb dessen Stillstand sicherzustellen.

Im Betrieb wird das Abwasser über eine nicht dargestellte Zulaufleitung, die mit einem Einlaufstutzen 5 des Einlaufbehälters 2 in Verbindung steht, zugeführt und dann insgesamt über das Schlammsieb 15 geleitet, wo die im Abwasser enthaltenen Feststoffe zurückgehalten werden. Das durch das Schlammsieb 15 fließende Abwasser gelangt über die Rohrverbindung 9 aus dem Einlaufbehälter 2 und über das Zulaufrohr 21 in den Fettabscheider 1 des Fettabscheiders 1. Im Fettabscheider 1 wird eine relativ große Menge des Abwassers gesammelt (das Volumen ist durch DIN 4040 festgelegt), wobei sich das Abwasser im Fettabscheider 1 beruhigt, so daß das Fett nach oben aufsteigt und das gereinigte Abwasser sich im unteren Bereich des Abscheiders ansammelt und durch die Mündung 23 des Ablaufrohres 22 aus dem Fettabscheider 1 gefördert wird. Das Ablaufrohr 22 kommuniziert mit einem Ablauf 6, an dem die nicht dargestellte Ablaufleitung zum Abführen des gereinigten Wassers angeschlossen ist.

Die Verbindung zwischen dem Ablauf 6 und der Ablaufleitung ist vorzugsweise ein Schnellverschluß, so daß die Ablaufleitung schnell durch ein Probenentnahmerohr ausgetauscht werden kann. Vorzugsweise ist jedoch eine Probeentnahmeeinrichtung permanent zwischengeschaltet.

Das im Fettabscheider 1 aufschwimmende Fett kann an der Fettablaßmündung 12 über den Fettablaßhahn 13 entweder manuell oder automatisch abgezogen werden. Bei einem manuellen Fettabzug kann der Bediener durch ein Sichtfenster 11 erkennen, wie hoch die Fettschicht im Behälter ist, und kann das Fett ablassen, bis die Zwischenschicht zwischen Fett und Wasser bis zu einer Markierung im Sichtfenster angestiegen ist. Bei einem automatischen Fettabzug wird der Fettablaßhahn 13 durch eine nicht dargestellte Steuereinrichtung selbständig gesteuert.

Es ist zweckmäßig, im Fettabscheiderdeckel 19b eine Heizung vorzusehen, um die sich oben auf dem Wasser angesammelte Fettschicht im flüssigen und abzugsfähigen Zustand zu halten. Diese Heizung wird vorzugsweise automatisch gesteuert, wobei die Steuerung mit der automatischen Steuerung des Fettablaßhahns kombiniert werden kann. Das abgezogene Fett wird über die Leitung 17 in den Fettsammelbehälter 4 geleitet, der nach dem Auffüllen einfach durch Lösen und Abnehmen eines Deckels 4a ausgetauscht werden kann. Die Steuereinrichtungen z.B. für einen automatischen Betrieb sind in einem Schaltschrank 32 untergebracht, wobei die Steuerung zum Abziehen des Fettes einschließlich der Heizung 10 des Fettabscheiders 1 und der Füllstandsdetektoren im Schlammbehälter 3 und Fettsammelbehälter 4 in einer Steuerungseinrichtung vereint sein können, so daß ein vollautomatischer Betrieb der erfindungsgemäßen Fettabscheidevorrichtung möglich ist.

Fettabscheider müssen von Zeit zu Zeit aus Hygienegründen vollständig entleert werden, weshalb z.B. im Bodenbereich des Fettabscheiders 1 ein Hahn 30 zum Entleeren des Inhalts des Fettabscheiders 1 vorgesehen ist. Der Hahn 30 ist z.B. in einer Senke 31 im Bodenbereich des Fettabscheiders angeordnet, so daß der gesamte Inhalt des Fettabscheiders durch den Hahn 30 entweichen kann.

Ferner sind mehrere Elemente zum Entlüften der Fettabscheidevorrichtung gemäß DIN 4040 vorgesehen. Z.B. ist der Ablauf 6 in einem sich nach oben erstreckenden Lüftungsrohr angebracht, an das ein Entlüftungsschlauch 24 angeschlossen ist, mit dem die Kammer des Fettabscheiders 1 unmittelbar über den oben am Fettabscheiderdeckel 19b vorgesehenen Entlüftungsansatz 25 gelüftet werden kann. Der Einlaufbehälter 2 hat ebenfalls einen Entlüftungsansatz bzw. Entlüftungsstutzen 26 im Bereich des Deckels 2a, an den ein Entlüftungsschlauch 27 angeschlossen ist, der zwischen dem Einlaufbehälter 2 und dem Deckel 4a des Fettsammelbehälters 4 angeordnet und mit einem Entlüftungsansatz 28 des Fettsammelbehälters 4 in Verbindung steht, so daß der Behälter 4 über den Einlaufbehälter 2 entlüftet werden kann.

Da die gesamte Fettabscheidevorrichtung aus abgeschlossenen Behältern besteht, ist sie geruchsfrei, wobei nur beim Entlüften riechende Gase kontrolliert freigegeben werden.

Besonders vorteilhaft ist eine Schlammabscheidevorrichtung, die als separates Teil einem Fettabscheider üblicher oder besonderer Bauart zugeordnet werden kann. Diese beispielhafte, in der Zeichnung (Fig. 3 bis 5) abgebildete Schlammabscheidevorrichtung besteht im wesentlichen aus einem den Einlaufbehälter 2 bildenden kastenförmigen Gehäuse 33, z.B. aus Edelstahl, das einen abnehmbaren Deckel 34, zwei Seitenwände 35, 36, eine Rückwand 37 und eine Stirnwand 38 aufweist. Das Gehäuse 33 ist mit einem Boden 39 verschlossen. Im unteren Bereich oberhalb des Bodens 39 sind die Seitenwände 35, 36 gleichsinnig und vorzugsweise auch gleichwinklig aus der Vertikalen z.B. um 4 bis 10° abgewinkelt. Der Zweck dieser Abwinklung wird weiter unten erläutert.

Das Gehäuse 33 weist in der Rückwand 37 etwas unterhalb des Deckels 34 eine Einlauföffnung 5a mit einem Einlaufstutzen 5 und in der Stirnwand 38 im Bodenbereich eine Auslauföffnung 9a mit einem nach unten gebogenen Krümmer 9 auf. Im abgewinkelten Bereich der Seitenwandung 36 ist ein rundes Durchgangsloch 40 eingebracht. Ein ebenfalls rundes Lagerloch 41 ist im abgewinkelten Bereich der Seitenwandung 35 vorgesehen, wobei das Durchgangsloch 40 höher liegend angeordnet ist als das Lagerloch 41. Außenseitig ist gegen das Durchgangsloch 40 zentral der Zylinderabschnitt 42 größeren Durchmessers gesetzt, der senkrecht auf der abgewinkelten Wandung 36 steht und endseitig mit einem lösbaren Deckel bzw. einer lösbaren Lagerscheibe 43 abgedeckt ist. Kurz vor der Lagerscheibe 43 befindet sich eine Austragsöffnung 44 im nach unten weisenden Bereich des Zylinderabschnitts 42, an die ein nach unten gerichteter Austragsstutzen 45 angesetzt ist. Die Feder 16a ist zwischen dem Deckel 16 und der Lagerschiebe 43 eingespreizt.

Vor dem Lagerloch 41 ist außenseitig ein Lagerelement, z.B. eine Lagerscheibe 46 angeordnet, die von der Welle 49a der Schnecke 49 durchgriffen wird und ihr eine Drucklagerung gewährt. Außen an der Lagerscheibe ist der Motor 57 befestigt. Zudem ist in der Seitenwandung 35 kurz unterhalb des Deckels 34 ein Entlüftungsloch 47 vorgesehen, an das außenseitig ein Entlüftungsstutzen 48 angeschlossen ist. Das Durchgangsloch 40 wird von der drehbar gelagerten und angetriebenen Abschubschnecke 49 durchgriffen, deren schräg nach oben gestellte Welle 49a mit ihrem unteren Ende in der Lagerscheibe 46 und mit ihrem oberen Ende in der Lagerscheibe 43 lagert, wobei die Schneckenwindungen 49b sich von der Lagerscheibe 46 bis kurz vor den Rand der Austragsöffnung 44 erstrecken. Die Schneckenwelle 49a steht jeweils senkrecht auf der Lagerscheibe 43, 46 bzw. auf der Seitenwandung 35, 36, woraus eine für die Schrägstellung der Schnecke 49 einfache Lageranordnung resultiert. Die Schneckenwindungen 49b sind im Gehäusekasten in ihrem nach unten weisenden Mantelbereich etwa formschlüssig von einer im Querschnitt halbkreisförmigen Spaltsiebrinne 51 umhüllt, wobei der sich im Zylinderabschnitt 42 befindende Bereich 51a des Spaltsiebes zylindrisch ist.

Die Raumform des Spaltsiebes ergibt sich aus den Fig. 6 und 7. Gegen das Spaltsiebende 50 ist endseitig ein Ring 52 bzw. eine Scheibe 53 gesetzt. Mit der Scheibe 53 ist das Sieb an der Seitenwandung 35 im abgewinkelten Bereich befestigt, insbesondere sind an der Scheibe nach außen vorstehende Raststifte 53a vorgesehen, mit denen die Scheibe drehfest in der Lagerscheibe 46 einrastet. Am freien Ende des zylinderförmigen Bereichs 51a des Siebes 15 erstreckt sich der Ring 52 vom Umfangsrand nach außen, so daß er das Sieb 15 gegen die Innenwandung des Zylinderabschnitts 42 abdichtet. Da somit der Zwischenraum zwischen dem zylindrischen Bereich 51a des Siebes 15 und dem Zylinderabschnitt 42 von dem Bereich der Austragsöffnung 44 getrennt ist, kann die Austragsöffnung 44 bzw. der Austragsstutzen 45 seitlich und auch so angeordnet sein, daß der Austragsstutzen mit einem Winkel von 45° seitlich nach oben gerichtet sich vom Zylinderabschnitt 42 vorstehend erstreckt. Durch einen weiteren Anstieg im Förderweg des abgezogenen Schlamms wird ein zusätzlicher entgegen der Förderrichtung wirkender Druck erzeugt. Dieser Druck kann zum Pressen des Schlamms im Sieb 15 genügen, so daß das Sieb 15 nicht mit einem federbelasteten Deckel 16 versehen sein muß.

Die Welle 49a der Schnecke 49 erstreckt sich bis zur Lagerscheibe 43, wo die Welle 49a drehbar gelagert ist. Die Klappe 16 ist an der der Austragsöffnung 44 gegenüberliegenden Seite am Sieb 15 beispielsweise durch ein Scharniergelenk angelenkt und mit einer länglichen Ausnehmung vorsehen, die von der Welle 49a durchgriffen wird.

Kurz unterhalb der Einlauföffnung 5a ist im Gehäuse 2 gegen die Rückwandung 37 bündig ein Leitblech 54 gesetzt, das sich von einer Seitenwandung 36 zur anderen Seitenwandung 35 erstreckt und auf der der Rückwand 37 zugekehrten Randkante 55 der Spaltsiebrinne 51 aufsitzt. Demgemäß verläuft das Leitblech 54, das vorzugsweise ebenfalls ein Sieb und insbesondere ein Spaltsieb ist, von der Rückwand 37 schräg nach unten zur Spaltsiebrinne 51. Das Leitblech 54 kann aber auch als Lochblech oder dergleichen ausgebildet sein.

Nach einer besonderen Ausführungsform der Erfindung ist im Innenraum des Gehäuses 33 über dem Sieb 54 vor der Einlauföffnung 5a ein Prallblech 56 mit Abstand vorgeordnet, das sich zweckmäßigerweise schräg nach unten in Richtung Stirnwand 38 erstreckt.

Der Behälter 2 ist z.B. über die Flanschverbindung 20, das Zulaufrohr 21 und die Rohrverbindung 9 starr und fest mit dem Fettabscheider 1 verbunden, so daß keine weiteren Trag- oder Lagerelemente für den Behälter 2 erforderlich sind. Die Flanschverbindung 20 ist so ausgebildet, daß der Behälter 2 um eine vertikale Flanschmittenachse verschwenkbar befestigt ist. Der Behälter 2 kann aber auch auf andere Weise z.B. an einer Wandung eines Raumes oder über entsprechende Verbindungselemente am Fettabscheider 1 gelagert sein.

Der Behälter 2 kann auch im Behälter des Fettabscheiders 1 untergebracht sein. Dabei können entweder die Sammelbehälter 3, 4 ebenfalls im Behälter des Fettabscheiders 1 angeordnet oder die Leitungen 8, 27 aus dem Behälter des Fettabscheiders 1 herausgeführt werden.

Vorteilhaft ist, wenn um eine vertikale bzw. in Fließrichtung liegende Achse drehbare Anschlüsse 62 zwischen der Leitung 8 und dem Stutzen 45 sowie dem Behälter 3, zwischen dem Ablaufrohr 22 und dem Ablauf 6 und für die Leitungen 14, 24, 27 vorgesehen sind. Diese drehbaren Anschlüsse ermöglichen zusätzliche Aufstellungsvarianten der Behälter und erleichtern die Handhabung der Einzelteile.

Insbesondere sind das Zulaufrohr 21 und das Ablaufrohr 22 gegeneinander austauschbar ausgebildet und entsprechend am Deckel 19b des Fettabscheiders befestigt, so daß durch die verschwenkbare Flanschverbindung 20 und die drehbaren Anschlüsse 62 die Zu- und die Ablaufseite der erfindungsgemäßen Fettabscheidevorrichtung beliebig vertauscht und auf entsprechende Zu- und Ablaufrohre ausgerichtet werden kann. Hierdurch ist es möglich die Fettabscheidevorrichtung ohne konstruktive Maßnahmen an entsprechende räumliche Gegebenheiten, insbesondere bezüglich der Zu- und Ablaufrichtung des Wassers, anzupassen. Hierbei ist es von Vorteil, wenn auch der Schaltschrank 32 mit der elektonischen Steuereinrichtung drehbar bzw. schwenkbar an der Fettabscheidevorrichtung angeordnet ist, so daß er in den unterschiedlichen Anordnungen der Fettabscheidevorrichtung jeweils gut zugänglich angeordnet werden kann.

In einer weiteren Ausführungsform (Fig. 8) der Schlammabscheidevorrichtung erstreckt sich die Rinne 51 des Spaltsiebs 15 im Querschnitt etwa um 3/4 eines Kreises, so daß das Sieb 15 nach oben hin nur durch einen schmalen Längsspalt zur Aufnahme von Schlamm geöffnet ist. Ferner sind die Seitenwandungen 35, 36 des Einlaufbehälters nicht abgewinkelt. Im übrigen entspricht die Ausführungsform der oben beschriebenen.

Die Siebanordnung muß nicht, wie beispielhaft beschrieben, ausgebildet sein. Ein erfindungswesentliches Merkmal ist, daß das Abwasser auf das Sieb geleitet wird, wo das Sieb mit einer Abzugs- oder Abschiebeeinrichtung zum Abtransport von auf dem Sieb gesammeltem Schlamm kombiniert ist. Dabei kann ein gröberes oder gleiches oder in der Form anderes Vorsieb vorgeschaltet sein.

Das erfindungsgemäße Schlammsieb ist nicht auf ein Metallsieb oder Spaltsieb beschränkt; es kann jedes zum Filtern von Schlamm geeignete Filterelement z.B. auch ein Lochsieb oder ein entsprechendes Kunststoffsieb oder auch ein Papierfilter, der für das im Abwasser gelöste Fett durchlässig ist und die Feststoffe zurückhält, verwendet werden. Ein Spaltsieb erbringt jedoch besondere neue oder überraschende Filterergebnisse.

Der erfindungsgemäße Behälter 2 hat eine relativ kleine Raumform; dennoch können große Abwassermengen durchgesetzt werden. Die Siebanordnung ist robust und arbeitet sehr effektiv, weil der Schlamm entweder kontinuierlich oder je nach Anfall periodisch vom Sieb abgetragen werden kann. Der sich bereits auf dem Vorsieb 54 anfallende Schlamm wird durch die Abwasserströmung zum Haupt-Schlammsieb gespült, sammelt sich dort an und wird von der Schnecke bzw. einer entsprechenden Abtrageeinrichtung ausgetragen. Die Anordnung des Behälters 2 oberhalb des maximalen Höhenstandes einer Fettabscheideschicht im Fettabscheider ermöglicht das Einbringen des vom Schlamm befreiten Abwassers in den Fettabscheiderbehälter auf besonders einfache Weise durch Ausnutzung des freien Falls des Abwassers. Möglich ist aber auch, den Einlaufbehälter 2 neben oder unterhalb des Fettabscheiderbehälters anzuordnen und das vom Schlamm befreite Abwasser in den Fettabscheider zu pumpen. Sofern als Fettabscheider ein unter Druck stehender Fettabscheider verwendet wird, sind entsprechende und bekannte Vorkehrungen zum Einbringen des Abwassers vorzusehen.

## Patentansprüche

1. Fettabscheidevorrichtung zum Abtrennen von Fett und Schlamm aus Abwasser mit einer ersten Stufe zum Abtrennen des Schlamms und einer zweiten Stufe mit einem insbesondere nach dem Aufschwimmprinzip arbeitenden Fettabscheider (1) zum Abtrennen des Fetts,
**dadurch gekennzeichnet**,
daß die erste Stufe ein zum Aussieben der den Schlamm bildenden Feststoffteilchen geeignetes, feststehendes Schlammsieb (15) aufweist, durch das das Abwasser geleitet wird, wobei die erste Stufe eine automatisch und kontinuierlich arbeitende Einrichtung zum Abziehen oder Abschieben der vom Schlammsieb (15) zurückbehaltenen, den Schlamm bildenden Feststoffe aufweist, wobei das Schlammsieb (15) oberhalb des Fettabscheiders (1) angeordnet und mit diesem verbunden ist.

2. Fettabscheidevorrichtung nach Anspruch 1,
dadurch **gekennzeichnet**,
daß die automatisch arbeitende Einrichtung zum Abführen der vom Schlammsieb (15) zurückgehaltenen Feststoffe eine den Schlamm bzw. die Feststoffe zusammenpressende Einrichtung ist.

3. Fettabscheidevorrichtung nach Anspruch 1 und/oder 2,
dadurch **gekennzeichnet** ,
daß die Einrichtung zum Abführen der vom Sieb (15) zurückgehaltenen Feststoffe eine Schnecke (49) ist, wobei das Sieb (15) die Schnecke (49) rinnenartig umgibt.

4. Fettabscheidevorrichtung nach Anspruch 3,
dadurch **gekennzeichnet**,
daß die Raumform des Siebs (15) einen rinnenförmigen Bereich (51) und einen sich daran anschließenden zylinderförmigen Bereich (51a) umfaßt, so daß sich im zylinderförmigen Bereich ein Pfropfen aus den den Schlamm bildenden Feststoffen bilden kann.

5. Fettabscheidevorrichtung nach Anspruch 4,
dadurch **gekennzeichnet** ,
daß das Sieb (15) am freien Ende (15a) des zylinderförmigen Bereichs (51a) einen federbelasteten Deckel (16) aufweist, der die den Schlamm bildenden Feststoffe im Sieb (15) zurückhält.

6. Fettabscheidevorrichtung nach einem oder mehreren der Ansprüche 1 bis 5,
dadurch **gekennzeichnet** ,
daß das Schlammsieb (15) ein Spaltsieb ist.

7. Fettabscheidevorrichtung nach Anspruch 6,
dadurch **gekennzeichnet** ,
daß das Schlammsieb (15) aus parallel auf Abstand verlaufenden Profildrähten oder -stäben (60) ausgebildet ist, die in bestimmten, relativ großen Abständen durch querverlaufende Profildrähte oder -stäbe (61) verbunden sind.

8. Fettabscheidevorrichtung nach Anspruch 7,
dadurch **gekennzeichnet** ,
daß die einlaufseitige Spaltbreite des Schlammsiebs (15) etwa 0,5 bis 5,0 mm, insbesondere 0,5 bis 1,5 mm beträgt.

9. Fettabscheidevorrichtung nach Anspruch 7 und/oder 8,
dadurch **gekennzeichnet** ,
daß die auslaufseitige Spaltbreite zwischen benachbarten Profilstäben (16) weiter als die einlaufseitige Spaltbreite ist, so daß sich die Siebspalte zwischen den Profilstäben (60) von der Einlaufseite zur Auslaufseite hin keilförmig erweitern.

10. Fettabscheidevorrichtung nach einem oder mehreren der Ansprüche 1 bis 9,
dadurch **gekennzeichnet** ,
daß das Schlammsieb (15) und die automatisch arbeitende Einrichtung zum Abführen der den Schlamm bildenden Feststoffe in Abführ- bzw. Abzugsrichtung schräg nach oben angeordnet ist, so daß die Feststoffe gegen die Schwerkraftwirkung befördert werden.

11. Fettabscheidevorrichtung nach einem oder mehreren der Ansprüche 1 bis 10,
dadurch **gekennzeichnet** ,
daß das Schlammsieb (15) in einem Einlaufbehälter angeordnet ist, der eine Einlauföffnung (5a) und ein als Sieb ausgebildetes schräg nach unten zwischen der Einlauföffung (5a) und dem Sieb (15) verlaufendes Leitblech (54) aufweist, das insbesondere als Spaltsieb oder Lochblech ausgebildet ist.

12. Fettabscheidevorrichtung nach Anspruch 10 und/oder 11,
dadurch **gekennzeichnet**,
daß das Spaltsieb (15) in einem Gehäuse (33) angeordnet ist, das eine Rückwand (37), eine Stirnwand (38), einen Boden (39), einen Deckel (34) und zwei Seitenwände (35, 36) umfaßt, wobei die Seitenwände (35, 36) gleichsinnig und vorzugsweise auch gleichwinklig im Bereich oberhalb des Bodens (39) aus der Vertikalen z. B. um 4° bis 10° abgewinkelt sind und das Schlammsieb (15) senkrecht zu den Seitenwänden (35, 36) in ihrem abgewinkelten Bereich angeordnet ist.

13. Fettabscheidevorrichtung nach einem oder mehreren der Ansprüche 1 bis 12,
dadurch **gekennzeichnet**,
daß zum Aufnehmen der vom Schlammsieb (15) zurückgehaltenen Feststoffe ein separater Schlammbehälter (3) vorgesehen ist, der auswechselbar mit der Fettabscheidevorrichtung verbunden ist.

14. Fettabscheidevorrichtung nach einem der Ansprüche 1 bis 13,
dadurch **gekennzeichnet** ,
daß zur Aufnahme des aus dem Fettabscheider (1) gelassenen Fetts ein separater Fettsammelbehälter (4) vorgesehen ist, der mit der Fettabscheidevorrichtung auswechselbar verbunden ist.

15. Fettabscheidevorrichtung nach einem oder mehreren der Ansprüche 1 bis 14,
dadurch **gekennzeichnet**,
daß das Schlammsieb (15) und die automatisch arbeitende Einrichtung zum Abführen der vom Schlammsieb (15) zurückgehaltenen, den Schlamm bildenden Feststoffe in einem Einlaufbehälter (2) untergebracht sind, der über dem Fettabscheider (1) und/oder einem Schlammbehälter (3) und/oder einem Fettsammelbehälter (4) angeordnet ist.

16. Fettabscheidevorrichtung nach Anspruch 15,
dadurch **gekennzeichnet**,
daß der Einlaufbehälter (2) um 90° bzw. 180° um eine vertikale Achse verschwenkbar mit dem Fettabscheider (1) verbunden ist.

17. Fettabscheidevorrichtung nach Anspruch 15 und/oder 16,
dadurch **gekennzeichnet** ,
daß sich die Einrichtung zum automatischen Abführen der vom Schlammsieb (15) zurückgehaltenen Feststoffe aus dem Einlaufbehälter (2) heraus über den Schlammbehälter (3) erstreckt, wobei die abgezogenen Feststoffe nach unten fallend durch ein Fallrohr (8) in einen Schlammbehälter (3) geleitet werden.

18. Fettabscheidervorrichtung nach einem oder mehreren der Ansprüche 1 bis 17,
dadurch **gekennzeichnet** ,
daß der Fettabscheider (1) mit einer Heizung versehen ist, um das im Fettabscheider (1) angesammelte Fett im flüssigen Zustand zu halten, und daß eine gemeinsame Steuereinrichtung für die automatisch arbeitende Einrichtung zum Abführen von Schlamm und für den Fettabscheider (1) zum automatischen Abziehen des gereinigten Abwassers und des davon getrennten Fetts vorgesehen ist.

19. Fettabscheidevorrichtung nach einem oder mehreren der Ansprüche 1 bis 18,
dadurch **gekennzeichnet**,
daß der Fettabscheider (1) einen Druckbehälter aufweist.

20. Verwendung einer Fettabscheidevorrichtung nach einem der Ansprüche 1 bis 19 zum Klären von Abwasser, das organisches Fett enthält.

## Claims

1. Fat-separating apparatus for separating off fat and sludge from waste water, having a first stage for separating off the sludge and a second stage with a fat separator (1), operating in particular in accordance with the floatation principle, for separating off the fat, characterized in that the first stage has a fixed sludge screen (15) which is suitable for screening out the sludge-forming solid particles and through which the waste water is directed, the first stage having an automatically and continuously operating arrangement for drawing off or pushing off the sludge-forming solids retained by the sludge screen (15), the sludge screen (15) being arranged above the fat separator (1) and being connected to the same.

2. Fat-separating apparatus according to Claim 1, characterized in that the automatically operating arrangement for discharging the solids retained by the sludge screen (15) is an arrangement which compresses the sludge or the solids.

3. Fat-separating apparatus according to Claim 1 and/or 2, characterized in that the arrangement for discharging the solids retained by the screen (15) is a worm (49), the screen (15). enclosing the worm (49) in a channel-like manner.

4. Fat-separating apparatus according to Claim 3, characterized in that the three-dimensional form of the screen (15) comprises a channel-like region (51) and an adjoining cylindrical region (51a), with the result that it is possible for a plug to form from the sludge-forming solids in the cylindrical region.

5. Fat-separating apparatus according to Claim 4, characterized in that, at the free end (15a) of the cylindrical region (51a), the screen (15) has a spring-loaded cover (16) which retains the sludge-forming solids in the screen (15).

6. Fat-separating apparatus according to one or more of Claims 1 to 5, characterized in that the sludge screen (15) is a bar screen.

7. Fat-separating apparatus according to Claim 6, characterized in that the sludge screen (15) is formed from profile wires or bars (60), which are spaced apart parallel to one another and are connected by transversely running profile wires or bars (61) at certain, relatively large intervals.

8. Fat-separating apparatus according to Claim 7, characterized in that the inlet-side gap width of the sludge screen (15) is approximately 0.5 to 5.0 mm, particularly 0.5 to 1.5 mm.

9. Fat-separating apparatus according to Claim 7 and/or 8, characterized in that the outlet-side gap width between adjacent profile bars (16) is wider than the inlet-side gap width, with the result that the screen gaps between the profile bars (60) widen in a wedge-shaped manner from the inlet side to the outlet side.

10. Fat-separating apparatus according to one or more of Claims 1 to 9, characterized in that the sludge screen (15) and the automatically operating arrangement for discharging the sludge-forming solids are arranged obliquely upwards in the discharging and/or drawing-off direction, with the result that the solids are conveyed counter to the action of gravitational force.

11. Fat-separating apparatus according to one or more of Claims 1 to 10, characterized in that the sludge screen (15) is arranged in an inlet container which has an inlet opening (5a) and a screen-design directing plate (54) which runs obliquely downwards between the inlet opening (5a) and the screen (15) and is designed, in particular, as a bar screen or perforated plate.

12. Fat-separating apparatus according to Claim 10 and/or 11, characterized in that the bar screen (15) is arranged in a housing (33) which comprises a rear wall (37), an end wall (38), a base (39), a cover (34) and two side walls (35, 36), the side walls (35, 36) being angled from the vertical, e.g. by 4° to 10°, in the same direction and preferably also at the same angle, in the region above the base (39), and the sludge screen (15) being arranged perpendicularly to the side walls (35, 36) in their angled region.

13. Fat-separating apparatus according to one or more of Claims 1 to 12, characterized in that provided in order to accommodate the solids retained by the sludge screen (15) is a separate sludge container (3), which is connected exchangeably to the fat-separating apparatus.

14. Fat-separating apparatus according to one of Claims 1 to 13, characterized in that provided in order to accommodate the fat let out of the fat separator (1) is a separate fat-collecting container (4), which is connected exchangeably to the fat-separating apparatus.

15. Fat-separating apparatus according to one or more of Claims 1 to 14, characterized in that the sludge screen (15) and the automatically operating arrangement for discharging the sludge-forming solids retained by the sludge screen (15) are accommodated in an inlet container (2) which is arranged above the fat separator (1) and/or a sludge container (3) and/or a fat-collecting container (4).

16. Fat-separating apparatus according to Claim 15, characterized in that the inlet container (2) is connected to the fat separator (1) such that it can be pivoted through 90° and/or 180° about a vertical axis.

17. Fat-separating apparatus according to Claim 15 and/or 16, characterized in that the arrangement for automatically discharging the solids retained by the sludge screen (15) extends out of the inlet container (2) over the sludge container (3), the drawn-off solids, dropping downwards, being directed into a sludge container (3) by way of a downpipe (8).

18. Fat-separating apparatus according to one or more of Claims 1 to 17, characterized in that the fat separator (1) is provided with a heating means in order to keep in the liquid state the fat collected in the fat separator (1), and in that there is provided a joint control arrangement for the automatically operating arrangement for discharging sludge and for the fat separator (1) for automatically drawing off the cleaned waste water and the fat separated therefrom.

19. Fat-separating apparatus according to one or more of Claims 1 to 18, characterized in that the fat separator (1) has a pressure vessel.

20. Use of a fat-separating apparatus according to one of Claims 1 to 19 for clarifying waste water which contains organic fat.

## Revendications

1. Installation pour la séparation des graisses pour séparer des graisses et boues des eaux usées, cette installation comportant un premier étage pour séparer les boues et un deuxième étage muni d'un séparateur de graisses (1) fonctionnant en particulier d'après le principe de flottement, pour séparer les matières grasses,
caractérisée en ce que le premier étage comporte un tamis à boues fixe (15) approprié pour éliminer les particules solides formant les boues et à travers lequel passent les eaux usées, le premier étage comportant un dispositif travaillant de façon automatique et continue pour l'extraction ou l'évacuation par poussée des particules solides formant les boues retenues par le tamis à boues (15), le tamis à boues (15) étant disposé au-dessus du séparateur de graisses (1) et étant relié à celui-ci.

2. Installation pour la séparation des graisses selon la revendication 1,
caractérisée en ce que le dispositif automatique d'évacuation des matières solides retenues par le tamis à boues (15) est un dispositif de compression des boues ou des matières solides.

3. Installation pour la séparation des graisses selon la revendication 1 et/ou 2,
caractérisée en ce que le dispositif d'évacuation des matières solides retenues par le tamis (15) est une vis sans fin (49), le tamis (15) entourant la vis sans fin (49) à la manière d'une goulotte.

4. Installation pour la séparation des graisses selon la revendication 3,
caractérisée en ce que la forme spatiale du tamis (15) comprend une section (51) en forme de goulotte suivie d'une section (51a) cylindrique, de manière à ce que, dans la section cylindrique, il puisse se former un bouchon de matières solides constituant les boues.

5. Installation pour la séparation des graisses selon la revendication 4,
caractérisée en ce que le tamis (15) comporte à l'extrémité libre (15a) de la section cylindrique (51a) un couvercle (16) soumis à un ressort qui retient les matières solides formant la boue dans le tamis (15).

6. Installation pour la séparation des graisses selon l'une ou plusieurs des revendications 1 à 5,
caractérisée en ce que le tamis à boues (15) est un tamis à fentes.

7. Installation pour la séparation des graisses selon la revendication 6,
caractérisée en ce que le tamis à boues (15) est formé par des fils ou barres profilés (60) parallèles séparés par une certaine distance et reliés à certains intervalles, relativement importants, par des fils ou barres profilés (61) s'étendant transversalement.

8. Installation pour la séparation des graisses selon la revendication 7,
caractérisée en ce que la largeur de la fente du côté de l'admission du tamis à boues (15) est d'environ 0,5 à 5,0 mm, en particulier de 0,5 à 1,5 mm.

9. Installation pour la séparation des graisses selon la revendication 7 et/ou 8,
caractérisée en ce que la largeur de la fente du côté de l'évacuation entre les barres profilées voisines (16) est supérieure à la largeur de la fente du côté de l'admission, les fentes entre les barres profilées (60) du tamis s'élargissant ainsi à la manière de coins de l'admission vers l'évacuation.

10. Installation pour la séparation des graisses selon l'une ou plusieurs des revendications 1 à 9,
caractérisée en ce que le tamis à boues (15) et le dispositif automatique d'évacuation des matières solides formant les boues sont disposés obliquement vers le haut dans la direction d'évacuation ou d'extraction, les matières solides étant ainsi transportées contre l'effet de la gravité.

11. Installation pour la séparation des graisses selon l'une ou plusieurs des revendications 1 à 10,
caractérisée en ce que le tamis à boues (15) est disposé dans un récipient d'admission qui comporte une ouverture d'admission (5a) et une tôle de guidage (54) s'étendant obliquement vers le bas entre l'ouverture d'admission (5a) et le tamis (15), cette tôle ayant la forme d'un tamis et en particulier d'un tamis à fentes ou à trous.

12. Installation pour la séparation des graisses selon la revendication 10 et/ou 11,
caractérisée en ce que le tamis à fentes (15) est disposé dans un boîtier (33) qui comporte une paroi postérieure (37), une paroi antérieure (38), un fond (39), un couvercle (34) et deux parois latérales (35, 36), les parois latérales (35, 36) étant coudées à partir de la verticale, par exemple de 4° à 10°, du même côté et de préférence du même angle, dans la région au-dessus du fond (39), et le tamis à boues (15) étant disposé perpendiculairement aux parois latérales (35, 36) dans leur région coudée.

13. Installation pour la séparation des graisses selon l'une ou plusieurs des revendications 1 à 12,
caractérisée en ce que, pour recevoir des matières solides retenues par le tamis à boues (15), un récipient à boues séparé (3) est prévu qui est relié de manière amovible à l'installation pour la séparation des graisses.

14. Installation pour la séparation des graisses selon l'une des revendications 1 à 13,
caractérisée en ce que, pour recevoir les graisses évacuées par le séparateur de graisses (1), il est prévu un récipient collecteur de graisses séparé (4) qui est relié de manière amovible à l'installation pour la séparation des graisses.

15. Installation pour la séparation des graisses selon l'une ou plusieurs des revendications 1 à 14,
caractérisée en ce que le tamis à boues (15) et le dispositif automatique d'évacuation des matières solides formant les boues retenues par le tamis à boues (15) sont logés dans un récipient d'admission (2) agencé au-dessus du séparateur de graisses (1) et/ou d'un récipient à boues (3) et/ou d'un récipient collecteur de graisses (4).

16. Installation pour la séparation des graisses selon la revendication 15,
caractérisée en ce que le récvipient d'admission (2) est relié au séparateur de graisses (1) de manière à pouvoir pivoter de 90° ou de 180° autour d'un axe vertical.

17. Installation pour la séparation des graisses selon la revendication 15 et/ou 16,
caractérisée en ce que le dispositif d'évacuation automatique des matières solides retenues par le tamis à boues (15) s'étend hors du récipient d'admission (2) au-delà du récipient à boues (3), les matières solides extraites étant guidées vers un récipient à boues (3) en tombant vers le bas à travers un tuyau de descente (8).

18. Installation pour la séparation des graisses selon l'une ou plusieurs des revendications 1 à 17,
caractérisée en ce que le séparateur de graisses (1) comporte un dispositif de chauffage pour maintenir les graisses collectées dans le séparateur de graisses (1) dans l'état liquide, et qu'un dispositif d'entraînement commun du dispositif automatique d'évacuation des boues et du séparateur de graisses (1) est prévu pour évacuer automatiquement les eaux usées assainies et les graisses séparées d'elles.

19. Installation pour la séparation des graisses selon l'une ou plusieurs des revendications 1 à 18,
caractérisée en ce que le séparateur de graisses (1) comporte un réservoir à pression.

20. Utilisation d'une installation selon l'une des revendications 1 à 19 pour décanter des eaux usées contenant des graisses organiques.
